# EUROPÄISCHE PATENTANMELDUNG

(11) **EP 1 350 769 A1**
(43) Veröffentlichungstag der Anmeldung: **08.10.2003**
(21) Anmeldenummer: 02405267.2
(22) Anmeldetag: 04.04.2002
(51) Int. Cl.: C03B 33/02

(54) **Vorrichtung und Verfahren zum Teilen von vertikalen Glasplatten**

(71) Anmelder: Bystronic Maschinen AG, CH-4922 Bützberg (CH)
(72) Erfinder: Gfeller, Hans, 4912 Aarwangen (CH)
(74) Vertreter: AMMANN PATENTANWAELTE AG BERN

(57) **Zusammenfassung**

Die Vorrichtung (30, 70) zum Teilen einer Glasplatte, wie einer einfachen Glasscheibe, einer beschichteten Glasscheibe oder einer Verbundglasscheibe, weist zum Stützen der Glasplatte eine Auflagefläche (31, 73) auf, die sich in einer im Wesentlichen vertikalen Lage befindet oder die mit der Vertikale einen Winkel bildet, der höchstens 45 Grad ist. Weiter umfasst die Vorrichtung (30, 70) eine Brechvorrichtung (39, 40, 42), mit welcher die Glasplatte entlang einer ersten horizontal verlaufenden Linie gebrochen werden kann. Die Vorrichtung vereinfacht beim Brechen der Glasplatte deren Handhabung.

## Beschreibung

Die Erfindung bezieht sich auf eine Vorrichtung zum Teilen von Glasplatten gemäss Oberbegriff des Anspruchs 1.

Die Erfindung bezieht sich ferner auf ein Verfahren gemäss Oberbegriff des Anspruchs 12.

Glasplatten werden bei bekannten Schneid- und Brech-Anlagen in der horizontalen Lage bearbeitet. Die Glasplattenrohlinge, welche in Zuschnitte der gewünschten Grösse geteilt werden, sind üblicherweise grossflächig. Typischerweise haben sie eine Länge von 600 cm und eine Breite von 321 cm. Die Arbeitsstationen müssen daher entsprechend ausgebildet sein, was sich aber nachteilig in Bezug auf die Platzerfordernisse auswirkt.

Es kommt dazu, dass die Glasplatten üblicherweise in vertikaler Lage gelagert werden, so dass zur Beschickung der bekannten Schneid- und Brech-Anlagen eine geeignete Beschickungsvorrichtung nötig ist, die ein Drehen der Glasplatte in die Horizontale ermöglicht. Dadurch wird eine rasche Beschickung erschwert. Auch erfordert das Drehen der Glasplatten eine vorsichtige Handhabung, um eine Beschädigung zu vermeiden.

Ausgehend von diesem Stand der Technik liegt der vorliegenden Erfindung die Aufgabe zu Grunde, eine Vorrichtung der eingangs erwähnten Art zur Verfügung zu stellen, die eine möglichst geringe seitliche Ausdehnung aufweist und die zur Bearbeitung eine möglichst einfache Handhabung der Glasplatten ermöglicht.

Der Erfindung liegt ferner die Aufgabe zu Grunde, ein Verfahren der eingangs erwähnten Art anzugeben, bei welchem die Glasplatten möglichst platzsparend und einfach bearbeitet werden können.

Eine erfindungsgemässe Vorrichtung, welche die erstgenannte Aufgabe löst, ist im Anspruch 1 angegeben.

Ein erfindungsgemässes Verfahren, welches die zweitgenannte Aufgabe löst, ist im Anspruch 12 angegeben.

Die abhängigen Ansprüche geben bevorzugte Ausführungen an.

Die erfindungsgemässe Vorrichtung und das erfindungsgemässe Verfahren weisen folgende Vorteile auf:
(a) es wird bei der Bearbeitung eine platzsparende und einfache Handhabung der Glasplatten ermöglicht;
(b) die Beschickung der Anlage wird erleichtert;
(c) eine genaues Ausrichten der Glasplatten wird erleichtert.

Es sei vorgemerkt, dass in der folgenden Beschreibung und in den Patentansprüchen unter dem Begriff "Glasplatten" ganz allgemein Glas-enthaltende Platten verstanden werden sollen, wie z.B. einfache Glasscheiben, beschichtete Glasscheiben, Verbundglasscheiben (Glasscheiben mit einer dazwischenliegenden Kunststofffolie), mehrschichtige Verbundglasscheiben, Verbundsicherheitsglasscheiben, etc.

Die Erfindung wird im Folgenden anhand eines Ausführungsbeispiels unter Bezugnahme auf Figuren erläutert.

Es zeigt
Fig. 1 eine Vorderansicht der erfindungsgemässen Anlage,
Fig. 2 eine vergrösserte Darstellung der Schneid- und Brechstation sowie einer weiteren Brechstation gemäss Fig. 1,
Fig. 3 einen Schnitt entlang des unteren Teils der Schneid- und Brechstation gemäss Fig. 2,
Fig. 4 einen Schnitt entlang des unteren Teils der Brechstation gemäss Fig. 2 und
Fig. 5 ein Beispiel einer mit Ritzlinien versehenen Glasplatte.

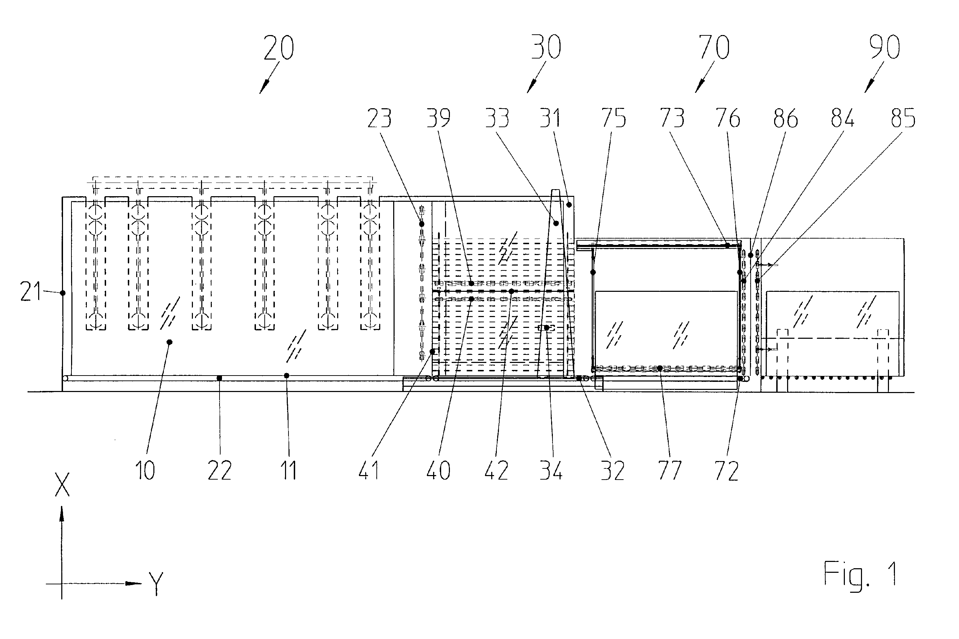

Die in Fig. 1 dargestellte Anlage zum Bearbeiten von Glasplatten umfasst mehrere Stationen: eine Zuführstation 20, eine Schneid- und Brechstation 30, eine weitere Brechstation 70 und eine Nachbearbeitungsstation 90.

Die Anlage ist als sogenannte Traverenmaschine ausgelegt, d.h. die Glasplatte wird in y-Richtung streifenweise (traverenweise) abgearbeitet. Dies bringt eine hohe Flexibilität bei der Verarbeitung insbesondere von verschiedenartigen Glasplatten mit sich.

Die Zuführstation 20 weist eine erste Auflagefläche 21 auf, welche die zu bearbeitende Glasplatte 10 stützt. Die erste Auflagefläche 21 ist im Wesentlichen vertikal ausgerichtet, so dass der Winkel (im Folgenden mit alpha bezeichnet) zwischen der ersten Auflagefläche 21 und der Vertikalen vorzugsweise im Bereich von 0 bis 10 Grad liegt.

Die Glasplatten werden üblicherweise im Wesentlichen lotrecht z. B. auf Glasgestellen gelagert, wobei der Neigewinkel etwa 5 bis 7 Grad beträgt. Vorzugsweise wird der Winkel alpha ähnlich wie der Neigewinkel der gelagerten Glasplatten gewählt, so dass zur Beschickung der Zuführstation 20 die Glasplatten lediglich translatorisch verschoben werden müssen und nicht gekippt zu werden brauchen.

Die erste Auflagefläche 21 kann als Luftkissenwand oder Rollenwand ausgebildet sein, über welche die zu bearbeitende Glasplatte 10 gleiten kann. Am unteren Ende der Zuführstation 20 ist ein erstes Transportband 22 vorgesehen, welches in horizontaler Richtung (im Folgenden auch y-Richtung genannt) zur Schneid- und Brechstation 30 führt.

Bei der Beförderung der Glasplatte 10 liegt diese mit einer ihrer Kanten 11 auf dem Transportband 22 auf und gleitet mit ihrer Rückseite über die Rollen bzw. dem Luftkissen der ersten Auflagefläche 21 hinweg, während die Vorderseite der Glasplatte 10 von vorne frei zugänglich ist.

Am rechten Ende der Zuführstation 20 ist eine erste vertikale Saugleiste 23 angebracht. Die Saugleiste 23 ist entlang einer im Wesentlichen vertikal verlaufenden Linie mit einer Vielzahl von Saugern ausgestattet, welche von hinten auf die Rückseite der zu bearbeitenden Glasplatte aufgebracht werden und mit dieser mittels Unterdruck lösbar verbunden werden können.

Die der Zuführstation 20 folgende Schneid- und Brechstation 30 weist eine zweite Auflagefläche 31 auf, die in einer Flucht mit der ersten Auflagefläche 21 ist. Anschliessend an das erste Transportband 22 ist am unter Enden der Schneid- und Brechstation 30 ein zweites Transportband 32 vorgesehen.

Auf der Vorderseite der zweiten Auflagefläche 31 ist eine in y-Richtung verfahrbare Schneidbrücke 33 positioniert. Diese ist mit einem Schneidwerkzeug (Schneidrad oder Laser) versehen, welches in x-Richtung verfahrbar ist und zusätzlich eine Drehachse zur Drehung des Schneidwerkzeuges aufweisen kann. Mittels des Schneidwerkzeuges ist die Vorderseite der Glasplatte mit Ritzlinien versehbar, entlang welchen sie dann in die einzelnen Teile der gewünschten Grösse gebrochen wird. Nebst rechteckigen Formen können mittels des Schneidwerkzeuges auch freie Formen geritzt werden. Die Schneidbrücke 33 kann noch mit weiteren Werkzeugen zur Bearbeitung der Glasplatte ausgestattet sein, die vorzugsweise in x-Richtung verfahrbar sind und zusätzlich eine Drehachse aufweisen können. So ist z. B. denkbar, eine Schleifeinrichtung vorzusehen, um z. B. die Schicht einer beschichteten Glasplatte an bestimmten Stellen abtragen zu können, oder eine Bohreinrichtung, um die Glasplatte an bestimmten Stellen mit einem Loch versehen zu können.

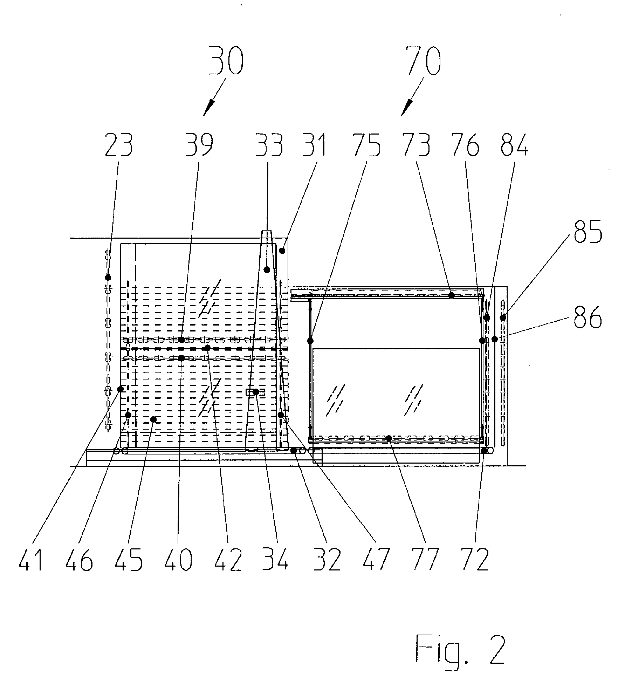

Wie auf Fig. 2 schematisch angedeutet ist, ist die Schneidbrücke mit einer Zange 34 ausgestattet, mit welcher eine Glasplatte an ihrem rechten Rand ergreifbar ist und durch Verschiebung der Schneidbrücke 33 in y-Richtung genau positionierbar ist.

Die zweite Auflagefläche 31 der Schneid- und Brechstation 30 ist mit einer ersten horizontalen Saugleiste 39 und vorzugsweise mit einer zweiten horizontalen Saugleiste 40 versehen. Die beiden Saugleisten 39 und 40 sind ähnlich wie die erste vertikale Saugleiste 23 mit einer Vielzahl von Saugern versehen, um sie mit der Glasplatte lösbar verbinden zu können.

Zwischen der ersten vertikalen Saugleiste 23 und dem linken Ende der beiden horizontalen Saugleisten 39 und 40 ist ein erster vertikaler Brechbalken 41 angebracht. Dieser kann von hinten auf die Rückseite der Glasplatte angebracht werden, um diese entlang einer vertikalen Ritzlinie zu brechen (sogenannter "X-Schnitt").

Zwischen den beiden horizontalen Saugleisten 39 und 40 ist ein erster horizontaler Brechbalken 42 angebracht, mit welchem die Glasplatte bzw. ein Teil davon entlang einer horizontalen Ritzlinie gebrochen werden kann (sogenannter "Y-Schnitt").

Der erste horizontale Brechbalken 42 und die beiden horizontalen Saugleisten 39 und 40 sind in der x-Richtung verfahrbar gelagert, um die Glasplatte bzw. ein Teil davon entlang einer beliebigen horizontal verlaufenden Ritzlinie brechen zu können. Die beiden horizontalen Saugleisten 39 und 40 dienen auch dazu, die Glasplatte bzw. den oberen Teil der geteilten Glasplatte zu halten und diesen absenken zu können.

Wie in Fig. 2 durch die gestrichelten Linien dargestellt, ist die zweite Auflagefläche 31 im Wesentlichen über ihre ganze Breite mit einer Vielzahl von Leisten 45 versehen. Die Leisten 45 sind zusammen mit dem ersten horizontalen Brechbalken 42 und mit den beiden horizontalen Saugleisten 39 und 40 jeweils am linken und rechten Randbereich der Schneid- und Brechstation 31 miteinander auf einer vertikal verlaufenden Kette 46 und 47 verbunden und bilden so zusammen eine Art Rollladen, der in x-Richtung verfahrbar ist.

Die Leisten 45 bestehen aus einem festen Material, z. B. Metall, so dass die zweite Auflagefläche 31 eine feste Wand bildet, welche die Glasplatte entsprechend stützt. So wird gewährleistet, dass der Druck, welcher das Schneidwerkzeug auf die Vorderseite der Glasplatte beim Schneiden ausübt, durch die zweite Auflagefläche 31 aufgefangen wird und der Bereich des Glases um die Ritzlinien nicht durch zu hohe Spannungen beschädigt wird.

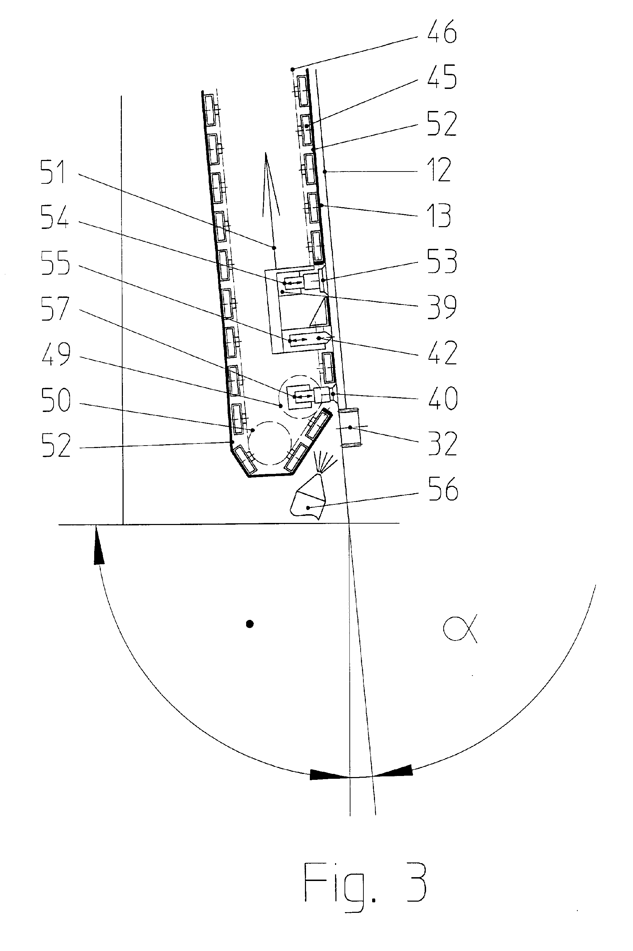

Fig. 3 zeigt einen Schnitt des unteren Teils der Schneid- und Brechstation 30. Wie oben beschrieben, liegt die Glasplatte mit ihrer Rückseite auf der zweiten Auflagefläche auf. Diese ist im Wesentlichen vertikal ausgerichtet, so dass der Winkel alpha zwischen der Vertikalen und der zweiten Auflagefläche vorzugsweise im Bereich von 0 bis 10 Grad liegt.

Die einzelnen Leisten 45 sind gelenkig auf den Ketten 46 und 47 angebracht, welche im unteren Bereich der Schneid- und Brechstation jeweils durch zwei Rollen 49 und 50 umgelenkt werden. Ähnlich sind zum Umlenken der Ketten 46 und 47 im oberen Bereich der zweiten Auflagefläche 31 zwei weitere (nicht dargestellte) Rollen vorgesehen.

Weiter sind die Leisten 45 mit einer beweglichen Auflagematte 52 überzogen, welche z. B. aus einem Gewebeband besteht, das vorzugsweise mit Kunststoff beschichtet ist. Die Auflagematte 52 erstreckt sich im Wesentlichen über die ganze Breite der Leisten 45, so dass die Glasplatte 12 beim Ritzen auf dieser aufliegt.

Wird wie in Fig. 3 durch den Pfeil 51 dargestellt, der erste horizontale Brechbalken 42 zusammen mit den beiden horizontalen Saugleisten 39 und 40 in vertikaler Richtung nach oben verfahren, so werden die Leisten laufend um die Rollen umgelenkt und tauchen vorne auf. Wie dies in Fig. 3 durch die Doppelpfeile 54, 55 und 57 angedeutet ist, sind die jeweiligen Saugerköpfe 53 auf der ersten horizontalen Saugleiste 39, die Saugerköpfe auf der zweiten horizontalen Saugleiste 40 und der Brechbalken 42 quer zur Oberfläche der Glasplatte 12 verschiebbar, um zu verhindern, dass sie beim Verfahren die Rückseite 13 der Glasplatte 12 streifen.

Am unteren Ende der Schneid- und Brechstation 30 ist eine Vielzahl von Luftdüsen 56 entlang einer horizontalen Richtung angebracht. Mittels diesen lässt sich Luft zwischen die Auflagematte 52 und die Glasplatte 12 blasen. Da die Auflagematte 52 eine luftdichte Fläche bildet, strömt die Luft dabei zwischen der Auflagematte 52 und der Glasplatte 12 von unten nach oben und erzeugt so ein Luftkissen, auf welchem der untere Teil der Glasplatte 12 nach dem Y-Brechen beim Transport zur Brechstation 70 hinweggleiten kann.

Wie in Fig. 2 ersichtlich ist anschliessend an die Schneid- und Brechstation 30 die weitere Brechstation 70 vorgesehen. Fluchtend mit dem zweiten Transportband 32 ist am unteren Ende der Brechstation 70 ein drittes Transportband 72 angeordnet. Die Brechstation ist mit einem vierten Transportband 73 versehen, das, geführt durch eine linke und rechte Schiene 75 bzw. 76, in der x-Richtung verfahrbar ist. Je nach Breite des abgeschnittenen Teils der Glasplatte wird das vierte Transportband 73 auf der entsprechenden Höhe positioniert, so dass die Glasplatte darüber gleiten kann. Die Brechstation 70 ist mit einer dritten horizontalen Saugleiste 77 versehen.

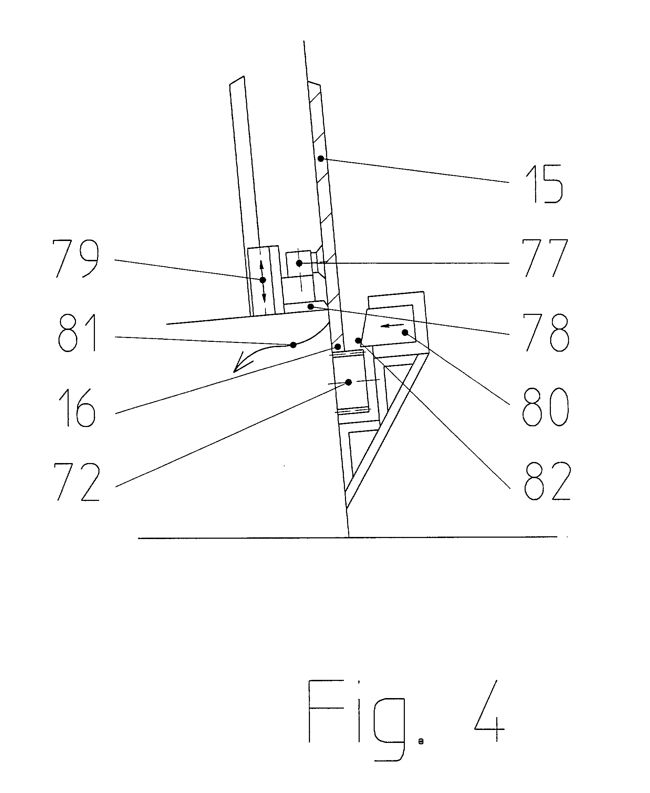

Wie Fig. 4 zeigt, ist die Saugleiste 77 an ihrem unterem Ende mit einer Gegendruck-Leiste 78 ausgestattet und wie dies durch den Doppelpfeil 79 angedeutet ist, entlang der Vertikalen verfahrbar. Auf der Vorderseite der Glasplatte 15 ist ein zweiter horizontaler Brechbalken 80 angebracht.

Die Brechvorrichtung 77, 78 und 80 wird verwendet, um gegebenenfalls einen Streifen des unteren Randes der Glasplatte 15 (die sogenannte "Y-Borte") abzubrechen. (Da die Glasplattenrohlinge üblicherweise keine sauberen Kanten aufweisen, ist es nötig, den Randstreifen zu entfernen.)

Zum Abbrechen der Y-Borte wird die dritte horizontale Saugleiste 77 in x-Richtung so verfahren, dass die Gegendruck-Leiste 78 auf der entsprechenden Ritzlinie der Y-Borte zu liegen kommt. Der zweite horizontale Brechbalken 80 wird dann von vorne gegen die Vorderseite der Glasplatte 15 gedrückt, so dass schliesslich die Y-Borte abbricht und, wie dies durch den Pfeil 81 angedeutet ist, nach hinten hinunterfällt.

Wie aus Fig. 4 ersichtlich ist, weist der zweite horizontale Brechbalken 80 einen keilartigen Querschnitt auf, wobei die vordere Kante 82 möglichst Nahe am Rand 16 der Glasplatte 15 angreifen vermag. Dadurch wird gewährleistet, dass die Distanz zwischen der Gegendruck-Leiste 78 und der vorderen Kante 82 des zweiten horizontalen Brechbalkens 80 möglichst gross ist und so eine möglichst grosses Biegemoment beim Brechen erzielt wird.

Beim Brechen der Y-Borte hält die dritte horizontale Saugleiste 77 die Glasplatte 15 in ihrer Position fest und wird nach dem Entfernen der Y-Borte zusammen mit der Glasplatte 15 nach unten verfahren, so dass diese mit der neu gebrochenen Kante auf dem dritten Transportband 72 zu liegen kommt.

Optional kann zum Abbrechen der Y-Borte am oberen Rand der Glasplatte 15 eine weitere Brechvorrichtung entlang des vierten Transportbandes 73 vorgesehen sein, die ähnlich der Brechvorrichtung 77, 78 und 80 ist und in x-Richtung verfahrbar ist.

Zum Brechen der Glasplatte entlang einer weiteren vertikalen Ritzlinie (sogenannter "Z-Schnitt") weist die Brechstation 70 am Ende des dritten Transportbandes 72 eine zweite vertikale Saugleiste 84 und dritte vertikale Saugleiste 85 sowie einen zweiten vertikalen Brechbalken 86 auf. Diese Brechvorrichtung 84, 85 und 86 ermöglicht es nebst den Z-Schnitten, gegebenenfalls einen Streifen des linken bzw. rechten Randes der Glasplatte (die sogenannte "X-Borte") zu entfernen.

Im Anschluss an die Brechstation 70 kann wie in Fig. 1 dargestellt, eine Nachbearbeitungsstation 90 vorgesehen sein. Diese kann z. B. einen Kipptisch umfassen, um die Glasplatte für eine manuelle Bearbeitung in die horizontale Lage kippen zu können.

Die Glasplatten-Teile werden dann am Ende der Anlage z.B. auf Glasgestelle abgestellt, (manuell oder automatisch) in Fächerwagen einsortiert, in einem Zwischenpuffer zwischengelagert oder direkt einer weiteren Bearbeitungslinie zugeführt.

Mit der erfindungsgemässen Anlage lässt sich folgendes Verfahren durchführen:

Die zu bearbeitende Glasplatte wird z. B. von einem Glasgestell oder Traverenspender mittels einer Beschickungsvorrichtung der Zuführstation 20 zugeführt.

Mittels des ersten Transportbandes 22 wird die Glasplatte zur Schneid- und Brechstation 30 befördert und mit der Zange 34 auf der zweiten Auflagefläche 31 entlang der y-Richtung positioniert, so dass der erste vertikale Brechbalken 41 und die für den X-Schnitt vorgesehene vertikale Ritzlinie übereinander zu liegen kommen.

Die erste vertikale Saugleiste 23 und die beiden horizontalen Saugleisten 39 und 40 werden auf die Glasplatte aufgebracht und halten diese mittels Unterdruck fest.

Die Glasplatte oder ein Teil davon wird dann mit dem Schneidwerkzeug geschnitten. Optional kann die Glasplatte vor dem Brechen noch durch weitere Arbeitsschritte bearbeitet werden, wie z. B. Bohren oder Schleifen.

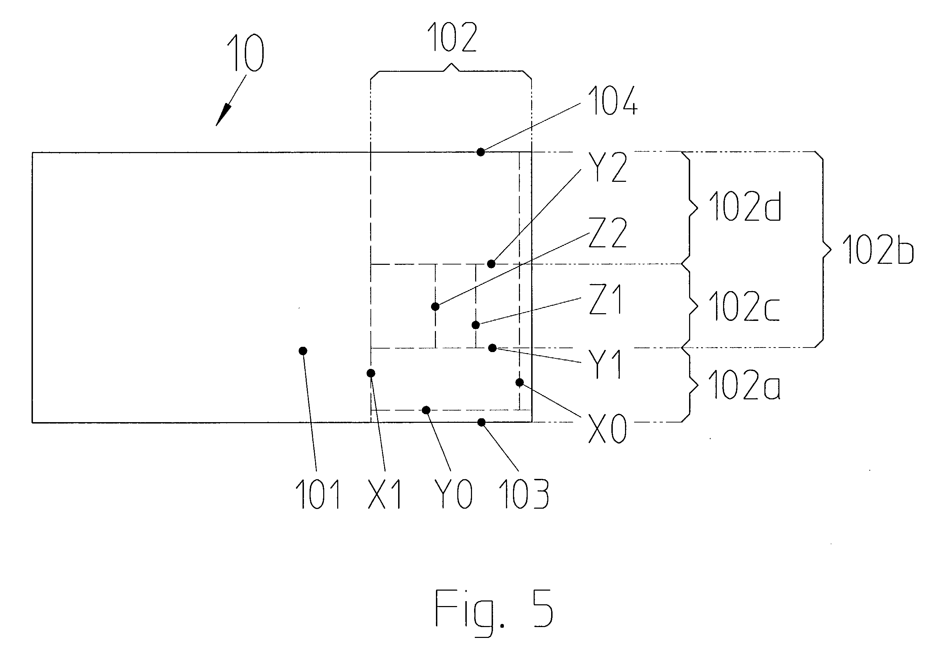

Fig. 5 zeigt ein Beispiel, bei welchem der rechte Teil 102 der Glasplatte 10 (sogenannte "Travere") mit den Ritzlinien X0, X1, Y0, Y1, Y2, Z1 und Z2 versehen ist. Im Folgenden sollen der Einfachheit halber die weiteren Arbeitsschritte anhand von Fig. 5 genauer erläutert werden, wobei jedoch diese nur ein mögliches Beispiel darstellt, die Glasplatte zu trennen. Es versteht sich von selbst, dass je nach gewünschter Unterteilung der Glasplatte die verschiedenen Arbeitsschritte entsprechend angepasst werden.

Nach dem Schneiden wird die Glasplatte 10 mittels des ersten vertikalen Brechbalkens 41 entlang der X1-Linie in zwei Teile 101 und 102 gebrochen.

Im nächsten Arbeitsschritt wird der erste horizontale Brechbalken 42 in x-Richtung verfahren, so dass er auf der Höhe der Ritzlinie Y1 zu liegen kommt. Dann werden die beiden horizontalen Saugleisten 39 und 40 mittels Unterdruck fest mit der Travere 102 verbunden und dann etwas noch oben verfahren, so dass zwischen der unteren Kante 103 der Travere 102 und dem zweiten Transportband 32 ein kleiner Zwischenraum entsteht, der beispielsweise in der Grössenordnung der Dicke der Glasplatte 10 liegt.

Zum Brechen wird der erste horizontale Brechbalken 41 gegen die Travere 102 vorgeschoben, wobei die beiden horizontalen Saugleisten 39 und 40 die Travere 102 entgegenhalten, bis sie schliesslich in zwei Teile 102a und 102b bricht.

Wie oben beschrieben, wird.die Travere 102 vor dem Brechen etwas angehoben, so dass die untere Kante 104 nicht auf dem zweiten Transportband 32 aufliegt und daher relativ frei bewegbar ist. Zusätzlich wird die Separation des unteren Teils 102a vom oberen Teil 102b durch die Schwerkraft unterstützt, so dass ein sauberer Bruch entlang der Y1-Linie resultiert.

Während des Brechvorgangs wird mit der Luftdüse 56 zwischen der Auflagematte 52 und der Glasplatte 12 ein Luftkissen erzeugt. Dadurch können Kratzer auf der Glasplatte 12 vermieden werden. Die strömende Luft begünstigt auch, dass die beim Brechvorgang entstehenden Glassplitter weggeblasen werden. Nach dem Brechvorgang wird die zweite horizontale Saugleiste 40 vom Teil 102a gelöst, so dass dieser zurück auf das zweite Transportband 32 hinunterrutscht. Dabei wird wegen des Luftkissens die Bildung von Kratzern auf der Glasplatte 12 vermieden. Die erste horizontale Saugleiste 39 hält dabei immer noch den oberen Teil 102b in seiner Position fest.

Beim Brechen von Verbundglas mit einer Folie kann es zur vollständigen Trennung der beiden Teile noch nötig sein, die Folie mechanisch mit einer Klinge oder thermisch mittels Wärmezufuhr zu durchtrennen.

Der untere Teil 102a wird dann zur nächsten Brechstation 70 befördert, wo im Beispiel gemäss Fig. 5 die Y-Borte entlang der Ritzlinie Y0 mittels des zweiten horizontalen Brechbalkens 80 abgebrochen wird, wie dies bereits oben beschrieben wurde. Das mittels der Luftdüse 56 zwischen der Auflagematte 52 und der Glasplatte 12 erzeugte Luftkissen vermeidet während des Abtransportes des unteren Teils 102a, dass dieser mit unerwünschten Kratzern versehen wird.

Schliesslich wird mittels des zweiten vertikalen Brechbalkens 86 die X-Borte entlang der Ritzlinie X0 abgebrochen und der restliche Teil via die Nachbearbeitungsstation 90 aus der Anlage ausgeschleust.

Der obere Teil 102b wird, nachdem der untere Teil 102a zur Brechstation 70 befördert wurde, mittels der ersten horizontalen Saugleiste 39 auf das zweite Transportband 32 abgesenkt. Analog der Verfahrensschritte zum Brechen der Travere 102 entlang der Y1-Linie, wird der Teil 102b gemäss Fig. 5 entlang der Ritzlinie Y2 in zwei Teile 102c und 102d getrennt.

Nachfolgend wird dann bei der Brechstation 70 der Teil 102c gemäss Fig. 5 entlang der Ritzlinien X0, Z1 und Z2 in weitere Teile getrennt. Schliesslich wird der Teil 102d zur Brechstation befördert und gemäss Fig. 5 durch Brechen entlang der Ritzlinie X0 die X-Borte entfernt.

Analog wie oben beschrieben, wird der Rest 101 der Glasplatte 10 in verschiedene Teile getrennt.

Die zugeschnittenen Teile werden dann der weiteren Bearbeitung oder einem Zwischenlager zugeführt.

Die Verwendung von Brechbalken in der horizontalen sowie in der vertikalen Richtung erlaubt es, die ursprüngliche Orientierung der Glasplatte bzw. der davon abgetrennten Teile beizubehalten. Somit kann vermieden werden, dass insbesondere die abgetrennten Teile rotiert werden müssen. Diese werden lediglich translatorisch horizontal und gegebenenfalls vertikal verschoben, wodurch u. a. auch die Gefahr, die Kanten zu beschädigen, verringert wird.

Die Brechvorrichtungen und Saugleisten greifen jeweils von hinten auf die Rückseite der Glasplatte an, so dass ihre Vorderseite unberührt bleibt. Dadurch kann die Gefahr vermindert werden, dass z. B. die Schicht bei beschichteten Glasscheiben beschädigt wird.

Im Weiteren wird durch die vertikale Anordnung der Anlage erreicht, dass die Glasplatte durch ihr Eigengewicht auf dem Transportband aufliegt, welches somit bei jeder Station eine Referenzebene für die Ausrichtung der Glasplatte liefert. Es braucht daher keine Anschläge zum Positionieren der Glasplatte, wie sie bei bekannten horizontal angeordneten Anlagen verwendet werden.

Aus der vorangehenden Beschreibung sind dem Fachmann zahlreiche Abwandlungen zugänglich, ohne den Schutzbereich der Erfindung zu verlassen, der durch die Ansprüche definiert ist.

So kann es, je nach Einsatzbereich der Anlage, vorteilhaft sein, den Winkel alpha, welcher die Auflagefläche gegenüber der Vertikalen aufweist, im Bereich von 0 bis 10 Grad oder im Bereich von 0 bis 45 Grad zu wählen. Die Wahl eines kleinen Winkels hat den oben beschriebenen Vorteil, dass die Glasplatten direkt von einem Glasgestell oder Traverenspender ohne zusätzliches Kippen übernommen werden können. Jedoch bewahrt man sich auch bei einem grösseren Winkel alpha, den Vorteil, dass die Anlage seitlich weniger ausgedehnt ist als die bekannten Anlagen, bei welchen die Glasplatten in der Horizontalen geschnitten werden.

Zum Brechen der Glasplatte kann anstelle eines Brechbalkens auch eine Art Rolle oder Kugel verwendet werden, welche mit einem bestimmten Druck entlang der Ritzlinie geführt wird.

Im Weiteren kann anstelle der ersten horizontalen Saugleiste 39 eine Zange oder eine geeignete Greifvorrichtung benutzt werden, um den oberen Teil der Travere (Teil 102b in Fig. 5) seitlich oder im oberen Randbereich beim Brechen festzuhalten. Um die Travere anzuheben oder den angeschnitten Teil abzusenken, ist die Zange bzw. Greifvorrichtung in x-Richtung verfahrbar.

Es ist auch denkbar, die zweite horizontale Saugleiste 40 wegzulassen. Da die Glasplatte beim Brechen etwas geneigt gegenüber der Vertikalen ist, wirkt ihr Eigengewicht dem Druck des Brechbalkens entgegen, so dass ein Kippen der Glasplatte nach vorne verhindert wird.

### Bezugszeichenliste

- 10: Glasplatte
- 11: untere Kante der Glasplatte 10
- 12: Glasplatte bei der Schneid- und Brechstation 30
- 13: Rückseite der Glasplatte 12
- 15: Glasplatte bei der Brechstation 70
- 16: unterer Rand der Glasplatte 15
- 20: Zuführstation
- 21: erste Auflagefläche
- 22: erstes Transportband
- 23: erste vertikale Saugleiste
- 30: Schneid- und Brechstation
- 31: zweite Auflagefläche
- 32: zweites Transportband
- 33: Schneidbrücke
- 34: Zange
- 39: erste horizontale Saugleiste
- 40: zweite horizontale Saugleiste
- 41: erster vertikaler Brechbalken
- 42: erster horizontaler Brechbalken
- 45: Leiste
- 46: linke Kette
- 47: rechte Kette
- 49: Rolle
- 50: Rolle
- 51: Verfahrrichtung der Saugleiste 39 nach oben
- 52: Auflagematte
- 53: Saugerkopf
- 54: Richtung, in welche Saugkopf 53 verschiebbar ist
- 55: Richtung, in welche der erste horizontale Brechbalken verschiebbar ist
- 56: Luftdüse
- 57: Richtung, in welche der Saugkopf auf der Saugleiste 40 verschiebbar ist
- 70: Brechstation
- 72: drittes Transportband
- 73: viertes Transportband
- 75: linke Schiene
- 76: rechte Schiene
- 77: dritte horizontale Saugleiste
- 78: Gegendruck-Leiste
- 79: Richtung, in welche die dritte horizontale Saugleiste verfahrbar ist
- 80: zweiter horizontaler Brechbalken
- 81: Richtung, in welche die abgebrochene Borte der Glasplatte 15 fällt
- 82: vordere Kante des zweiten horizontalen Brechbalkens
- 84: zweite vertikale Saugleiste
- 85: dritte vertikale Saugleiste
- 86: zweiter vertikaler Brechbalken
- 90: Nachbearbeitungsstation
- 101: linker Teil der Glasplatte 10
- 102: rechter Teil (Travere) der Glasplatte 10
- 102a: unterer Teil der Travere 102
- 102b: oberer Teil der Travere 102
- 102c: unterer Teil des Teils 102b
- 102d: oberer Teil des Teils 102b
- 103: untere Kante der Travere 102
- 104: obere Kante der Travere 102

- alpha: Winkel zwischen der Auflagefläche der Glasplatte und der Vertikalen
- x: vertikale Achse
- y: horizontale Achse
- X0: vertikale Ritzlinie zum Abbrechen der X-Borte (X-Nullschnitt-Linie)
- X1: vertikale Ritzlinie
- Y0: horizontale Ritzlinie zum Abbrechen der Y-Borte (Y-Nullschnitt-Linie)
- Y1, Y2: horizontale Ritzlinien
- Z1 Z2: vertikale Ritzlinien

## Patentansprüche

1. Vorrichtung (30, 70) zum Teilen einer Glasplatte (10, 102, 102b), wie einer einfachen Glasscheibe, einer beschichteten Glasscheibe oder einer Verbundglasscheibe, **dadurch gekennzeichnet, dass**
sie zum Stützen der Glasplatte (10, 102, 102b) eine Auflagefläche (31, 73) aufweist, die sich in einer im Wesentlichen vertikalen Lage befindet oder die mit der Vertikale einen Winkel bildet, der höchstens 45 Grad ist, und dass
sie eine erste Brechvorrichtung (39, 40, 42) umfasst, mit welcher die Glasplatte (10, 102, 102b) entlang einer ersten horizontal verlaufenden Linie (Y1, Y2) gebrochen werden kann.

2. Vorrichtung gemäss Anspruch 1, **dadurch gekennzeichnet, dass** sie eine zweite Brechvorrichtung (23, 41, 76, 84, 85, 86) umfasst zum Brechen der Glasplatte (10, 102, 102a, 102b) entlang einer vertikal verlaufenden Linie (X0, X1, Z1, Z2).

3. Vorrichtung gemäss Anspruch 1 oder 2, **dadurch gekennzeichnet, dass** die erste Brechvorrichtung (39, 40, 42) in der vertikalen Richtung verfahrbar ist.

4. Vorrichtung gemäss einem der Ansprüche 1 bis 3, **dadurch gekennzeichnet, dass** die erste Brechvorrichtung (39, 40, 42) einen ersten Brechbalken (42) umfasst.

5. Vorrichtung gemäss einem der Ansprüche 1 bis 4, **dadurch gekennzeichnet, dass** sie Festhaltemittel (39) umfasst, mit welchen die Glasplatte (102, 102b) oberhalb der ersten horizontal verlaufenden Linie (Y1, Y2) festgehalten werden kann.

6. Vorrichtung nach Anspruch 5, **dadurch gekennzeichnet, dass** die Festhaltemittel (39) in die Auflagefläche (31) integriert sind und zusammen mit der Auflagefläche (31) in der vertikalen Richtung verfahrbar sind.

7. Vorrichtung nach einem der Ansprüche 1 bis 6, **dadurch gekennzeichnet, dass** die Auflagefläche (31) den Teil der Glasplatte (102, 102b), der beim Schneiden mit Ritzlinien versehen wird, grösstenteils stützt.

8. Vorrichtung nach einem der Ansprüche 5 bis 7, **dadurch gekennzeichnet, dass** die Festhaltemittel (39) eine Vielzahl von Saugern (53) umfasst, die mittels Unterdruck auf die Glasplatte (13) anbringbar sind.

9. Vorrichtung nach einem der Ansprüche 1 bis 8, **dadurch gekennzeichnet, dass** sie zum Brechen der Glasplatte entlang einer zweiten Linie (Y0) eine dritte Brechvorrichtung (77, 78, 80) mit einem dritten Brechbalken (80) umfasst, der ein keilartiges Profil aufweist.

10. Vorrichtung nach einem der Ansprüche 1 bis 9, dass sie ein Vielzahl von Luftdüsen (56) umfasst zur Erzeugung eines Luftkissens zwischen der Auflagefläche (52) und der Glasplatte (12).

11. Anlage (20, 30, 70, 90) zum Bearbeiten von Glasplatten mit einer Vorrichtung nach einem der Ansprüche 1 bis 10.

12. Verfahren zum Teilen einer Glasplatte (102, 102b), wie einer einfachen Glasscheibe, einer beschichteten Glasscheibe oder einer Verbundglasscheibe, **dadurch gekennzeichnet, dass** die Glasplatte (102, 102b), während sie an einer Brechstation (30) entlang einer ersten horizontal verlaufenden Linie (Y1, Y2) gebrochen wird, sich in einer im Wesentlichen vertikalen Lage befindet oder mit der Vertikale einen Winkel bildet, der höchstens 45 Grad ist.

13. Verfahren nach Anspruch 12, **dadurch gekennzeichnet, dass** die Glasplatte (102, 102b), bevor sie entlang der ersten horizontal verlaufenden Linie (Y1, Y2) gebrochen wird, in vertikaler Richtung angehoben wird.

14. Verfahren nach einem der Ansprüche 12 bis 13, **dadurch gekennzeichnet, dass** die Glasplatte (102, 102b) in einen oberen Teil (102b, 102d) und einen unteren Teil (102a, 102c) geteilt wird, dann der untere Teil (102a, 102c) von der Brechstation (30) weggeführt wird und dann der obere Teil (102b, 102d) entweder entlang einer zweiten horizontal verlaufenden Linie (Y2) gebrochen wird oder von der Brechstation (30) weggeführt wird.

15. Verfahren nach einem der Ansprüche 12 bis 14, **dadurch gekennzeichnet, dass** die Glasplatte (10) zuerst entlang einer vertikal verlaufenden Linie (X1) in einen linken Teil (101) und einen rechten Teil (102) geteilt wird, und dann der rechte Teil (102) entlang der ersten horizontal verlaufenden Linie (Y1) gebrochen wird.

16. Verfahren nach einem der Ansprüche 12 bis 15, **dadurch gekennzeichnet, dass** an der Brechstation (30) abgebrochene Teile (102a, 102c, 102d) einer weiteren Brechstation (70) zugeführt werden, wo sie entlang einer horizontalen Linie (Y0) und/oder vertikalen Linie (X0, Z1, Z2) gebrochen werden.

17. Verfahren nach einem der Ansprüche 12 bis 16, **dadurch gekennzeichnet, dass** die von der Glasplatte (10) abgebrochenen Teile (102, 102a, 102c, 102d) innerhalb der Brechstation (30) ausschliesslich translatorisch befördert werden und dann translatorisch von der Brechstation (30) weggeführt werden.
